# EUROPEAN PATENT SPECIFICATION

(11) **EP 2 045 890 B1**
(45) Date of publication and mention of the grant of the patent: **12.03.2014**
(21) Application number: 08164223.3
(22) Date of filing: 12.09.2008
(51) Int. Cl.: H02G 1/08, H02G 3/00, H02G 9/06

(54) **Method for installing an XttH network**
Verfahren zur Installation eines XttH-Netzwerks
Procédé d'installation d'un réseau XttH

(30) Priority: 02.10.2007 BE 200700469
(43) Date of publication of application: 08.04.2009
(73) Proprietor: Crosswise NV, 2960 St.-Job-in't Goor (BE)
(72) Inventor: Wilderjans, Hein Juliaan Willem, 2960 St.-Job-in 't Goor (BE)
(74) Representative: D'Halleweyn, Nele Veerle Trees Gertrudis

(56) References cited:
- EP-A- 1 533 879
- GB-A- 2 339 085
- NL-A- 7 705 294

## Description

The present invention relates to a method for installing a final part ("the last mile") of a cable network of an XttH network (wherein X designates copper and/or optical fibre), in particular FttH or CttH (Fibre/Copper to the Home). The method according to the invention relates more particularly to the installation of a final part of a cable network between a distribution point and an end point, typically a house or group of houses.

According to the existing methods, two techniques can be distinguished. According to a first technique, a group of cables is buried along the length of a street and couplings such as fusion welds are then realized between a cable of this group of cables and a cable leading to a house to be connected. This is a time-consuming technique which requires a great deal of manual labour. In order to avoid such couplings it is further known to make use of a blowing technique. An empty duct is here laid along the length of a street, wherein branches are provided to the different houses and the cables are blown in from the distribution point to a house to be connected. This is however an expensive, time-consuming technique.

NL 7705294 discloses a method for installing a cable distribution network, in particular for laying the connecting cables to the individual houses. According to the disclosed method first and secondary tubes are used which are connected with each other close to an end point.

The present invention has for its object to provide a method of the type stated in the preamble, which is cheaper and easier to perform than the existing methods.

The method according to the invention is distinguished for this purpose in that it comprises the following steps of:
- burying a group of cables close to a number of end points, typically along the length of a street;
- preparing a first access point close to a first end point to be connected which provides access to the group of cables;
- preparing a subsequent access point close to a subsequent end point which provides access to the group of cables;
- cutting at the subsequent access point at least one cable which must be connected to the first end point, and fetching back this at least one cable back from the first access point so that at least one free cable end part is obtained, with a length corresponding to the distance between the subsequent and the previous access point, and using this at least one free cable end part of this at least one cable for the purpose of connecting the first end point.

Such a method has the advantage that no additional couplings are necessary between the distribution point and the end point to be connected, and that no expensive means have to be employed as in the blowing technique. It is noted that the distance between two end points, typically two groups of houses, is generally amply sufficient to bridge the distance between the access point and an associated end point. A previous and subsequent end point will thus typically be situated adjacently of each other. In the case a free cable part of greater length is required, one end point can be skipped when choosing the subsequent end point, as will be further elucidated with reference to the figures.

Advantageous embodiments of the method according to the invention are described in claims 2-6.

Note that the term 'fetching back' must be interpreted broadly and may refer to one of the following operations or a combination thereof: pulling back, blowing back, pushing back or any other suitable technique for making the free cable part available at the previous access point.

The present invention further relates to a cable network between a distribution point and a number of end points obtained according to the method of the invention.

The buried group of cables preferably consists of a set of multicable units, wherein each unit comprises a number of copper wires and/or a number of optical fibres which are received in an outer sheath. If both copper wires and optical fibres are provided, the system is thus suitable for both FttH and CttH networks.

The group of cables is further preferably received in an outer sheet, which can for instance be manufactured from polyethylene or the like, and which is preferably provided on the inner side with a lining with a low frictional resistance.

In a further developed embodiment a friction-limiting filler material is provided between the outer sheet and the group of cables such that the cables can be easily moved back. This filler material preferably has a water-blocking function (at least in the lengthwise direction of the cable).

The invention will be further elucidated on the basis of a non-limitative exemplary embodiment of the system and the method according to the invention, with reference to the accompanying drawings, in which:
- Figure 1: is a schematic view of a network structure to which the concept of the invention can be applied;
- Figures 2A-2F: illustrate schematically the different steps of an exemplary embodiment of the method according to the invention;
- Figure 3: shows an exemplary embodiment of a multicable-in-duct system for use in the system and the method according to the invention.

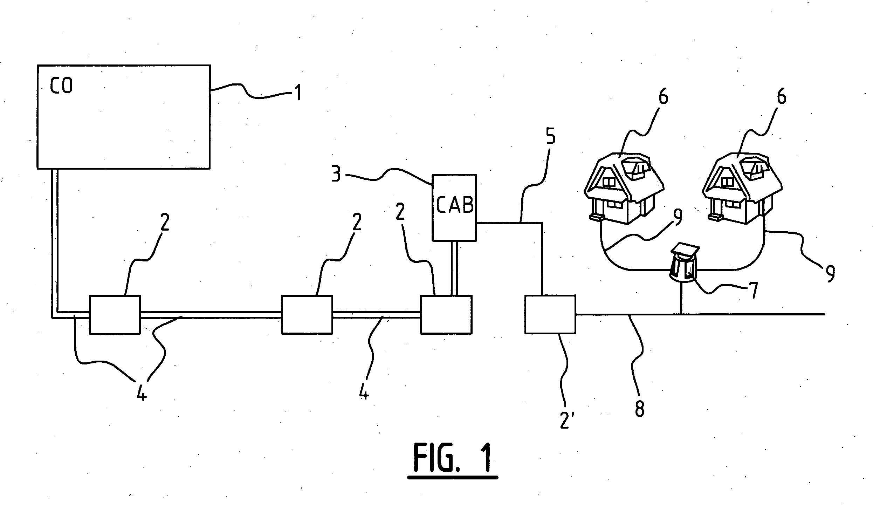

Figure 1 shows schematically the network infrastructure between a central office (CO) or the like, designated with reference numeral 1, and a house 6. Two levels can be distinguished here. A first level between central office 1 and a street cabinet 3 or the like, and a second level between street cabinet 3 and a house 6. At the first level the central office 1 is connected to street cabinet 3 by means of feeder cables 4 and manholes or inspection holes 2. The feeder cables can be traditional cables which are buried directly, or standard in-duct cables or in-microduct mini-cables or micro-cables.

At the second level a distribution cable 5 runs from street cabinet 3 to a manhole 2', and from here individual lines must be drawn to the different houses. Distribution cable 5 is typically a directly buried cable or a standard in-duct cable or in-microduct mini-cable or micro-cable.

The last kilometre of the cable network between manhole 2' and the individual houses 6 is typically one of the most difficult to realize in an underground network structure. A number of houses, for instance two houses, are typically connected via a shared drop point 7 (also referred to as handhole, junction box or cable installation point). When a customer (house 6) must be connected, a cable must be provided between house 6 and manhole 2' via drop point 7.

According to the prior art two methods can be distinguished for installing the "last mile". According to a first method, a group of cables 8 is arranged in a street. Close to the house 6 to be connected a cable from the group of cables is cut and a coupling is made to a second piece of cable which leads to house 6 directly or via drop point 7, wherein this coupling typically consists of a fusion weld in the case of an optical fibre. In order to avoid such couplings a second method was developed, which consists of blowing in the cables. Here an empty duct is provided and the different cables necessary for the connection of the different houses 6 are blown in one by one. Such a method is however relatively expensive and time-consuming.

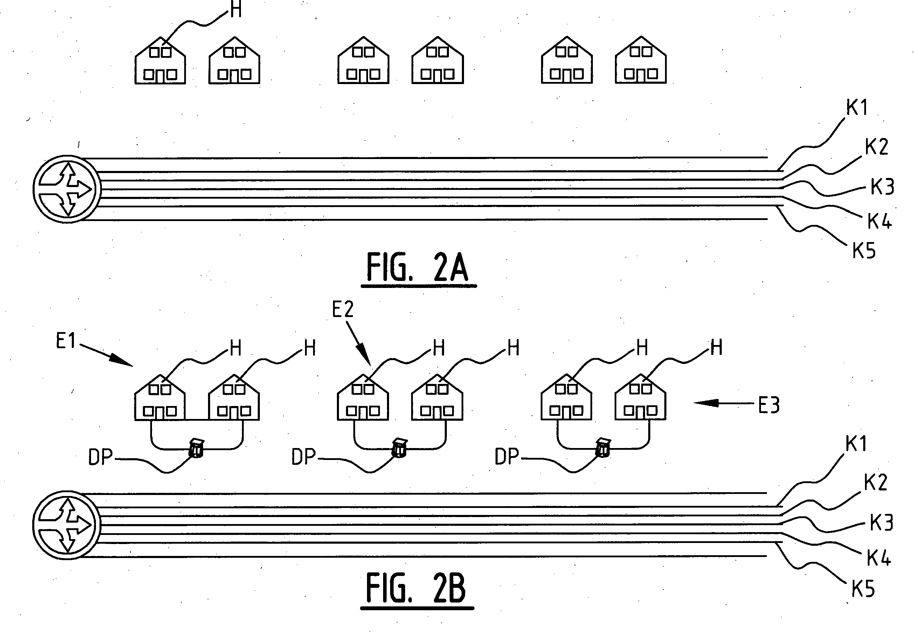

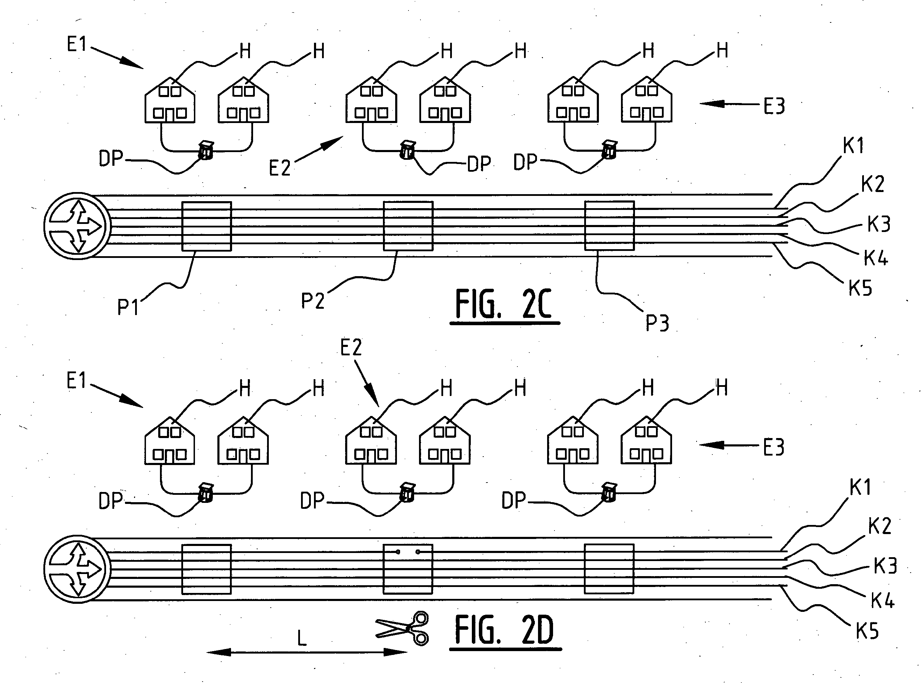

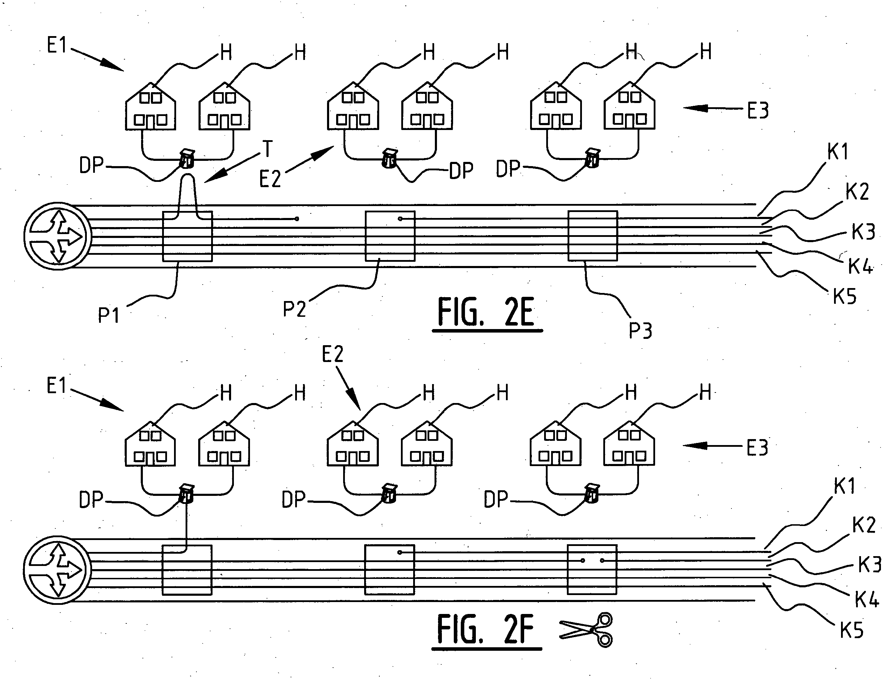

An exemplary embodiment of the method according to the invention will now be described with reference to figure 2. In a first step a group of cables K1 to K5 is buried close to a number of houses to be connected, see figure 2A. Such a group of cables will typically be buried along the length of the street.

Note that K1 to K5 are typically multicables. In the context of the patent the term 'cable' must be interpreted broadly, and the term 'cable' also includes any composite cable.

Each house H is then provided with a drop point DP, typically a hand hole or junction box, which is accessible from the street. In the shown example one drop point DP is installed per two houses H, see figure 2B.

In a subsequent step (see figure 2C) the different access points P1,P2,P3 etc. to the group of cables are prepared. This entails a hole being made to the buried group of cables. The group of cables will further typically be received in a jacket (see below) which must be opened in order to gain access to the cables.

Figures 2D and 2E will now illustrate how end point E1 can be connected. For this purpose a first cable K1 is cut at access point P2, as illustrated in figure 2D. Cable K1 can then be moved back from access point P1 so that a cable surplus is obtained at access point P1 of a length L corresponding to the distance between access point P1 and access point P2. The movement back is indicated with arrow T in figure 2E. This cable surplus of length L can then be used to bridge the distance between access point P1 and end point E1, see figure 2F. These steps can then be repeated for the other end points E2, E3 etc. to be connected.

It is noted that, if the distance between P1 and E1 were to be greater than length L, cable K1 can be cut at P3 instead of at P2. A free cable end part with a length 2L is in this way obtained.

The skilled person will appreciate that the number of end points, the number of houses per end point, the number of cables of the group of cables, the number of cables which must be connected per end point and so on are purely for the purpose of illustration in the exemplary embodiment of figure 2, and that these numbers can vary in accordance with the area to be connected (city, countryside and so on).

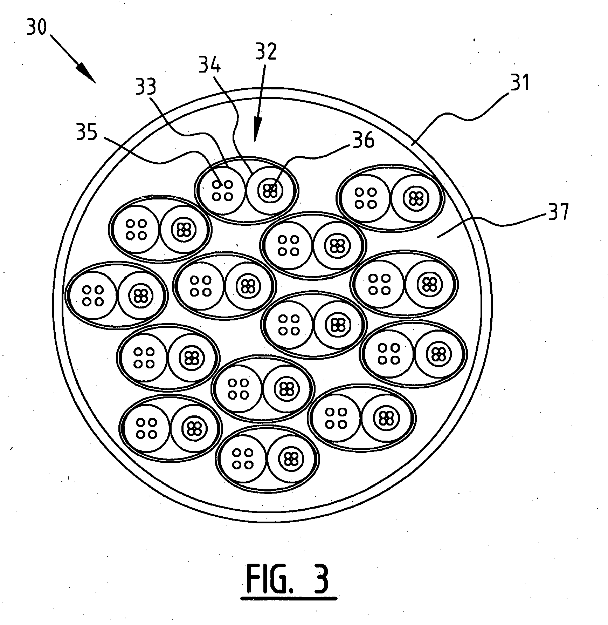

As already indicated above, the group of cables is preferably received in a shared outer sheet (or key duct), i.e. use is preferably made of a multicable-in-duct system. Such a system is shown schematically in figure 3. The multicable-in-duct system shown in figure 3 consists of a outer sheet or key duct 31 in which a number of multicable units 32 are received. A friction-reducing filler material 37 can be received between outer sheet 31 and multicable units 32. This filler material further preferably has a water-blocking function, at least in the lengthwise direction of the cable.

Outer sheet 31 is for instance manufactured from polyethylene or from a similar material. A lining with a low frictional resistance is preferably provided on the inner side. The crush resistance is preferably chosen for a depth of about 80 centimetres with a fetching back capability of 30 to 100 metres. The diameter of outer sheet 31 can for instance amount to 50 millimetres. Outer sheet 31 is further preferably easy to open without complicated tools being required. Multicable units 32 are typically designed as drop cables for XttH (X = copper and/or optical fibre). These multicable units further preferably have a coating with a low frictional resistance. The crush resistance of multicable units 32 is preferably similar to that of outer sheet 31.

The group of multicable units 32 can typically be split easily into individual cables, after which they can be further processed/terminated as fully-fledged cables.

In the embodiment of figure 3 a multicable unit 32 is shown with a number of copper wires 35 grouped in a sheath 33 and a number of optical fibres 36 grouped in a sheath 34. Sheaths 33,34 preferably also have a water-blocking function.

The friction-reducing filler material 37 between jacket 31 and multicable units 32 must preferably allow a multicable unit to be moved back over about 20 to 200 metres, and more preferably over about 30 to 100 metres, for a depth of about 80 centimetres. The skilled person will once again appreciate that the stated values are purely indicative and are also determined by the vicinity in which the multicable-in-duct system must be buried.

Figure 3 is only a possible embodiment of an accommodating arrangement for a group of cables, and the skilled person will appreciate that the embodiment can vary in accordance with the techniques used for fetching back and the type of cable it is wished to connect. Unit 32 can thus also consist of only a copper group or only an optical fibre group, or unit 32 can comprise two copper groups 33 and/or two or more optical fibre groups 34.

Finally, it is advantageous to provide the different multicable units 32 with a different identification means. These units 32 can thus all have a sheath with a different colour, printing, code and so on. The same applies for copper wires 35 and optical fibres 36.

The skilled person will understand that many variants and modifications are possible without departing from the scope of the invention, which is defined solely by the appended claims.

## Claims

1. Method for installing a final part of a cable network extending between a distribution point and an end point (E1), typically a house or group of houses, comprising the following steps of:
- burying a group of cables close to a number of end points (E1, E2, E3), typically along the length of a street;
- preparing a first access point (P1) close to a first end point to be connected which provides access to the group of cables (K1-K5);
- preparing a subsequent access point (P2) close to a subsequent end point (E2) which provides access to the group of cables; **characterized by**
- cutting at the subsequent access point (P2) at least one cable (K1) which must be connected to the first end point (E1), and fetching back (T) this at least one cable back from the first access point (P1) so that at least one free cable end part is obtained, with a length (L) corresponding to the distance between the subsequent (P2) and the previous access point (P1), and using this at least one free cable end part of this at least one cable for the purpose of connecting the first end point.

2. Method as claimed in claim 1, comprising of repeating the final two steps until all end points (E1, E2, E3) to be connected close to the buried group of cables are provided with the necessary cable length.

3. Method as claimed in any of the foregoing claims, **characterized in that** fetching back (T) consists of one of the following operations or a combination thereof: pulling back, blowing back, pushing back.

4. Method as claimed in any of the foregoing claims, **characterized in that** preparation of the access points comprises of digging a hole as far as the group of cables (K1-K5).

5. Method as claimed in claim 4, wherein the group of cables (K1-K5) is received in a jacket, **characterized in that** preparation further comprises of opening the jacket.

6. Method as claimed in any of the foregoing claims, wherein a drop point (DP) is provided per one or more end points, **characterized in that** the at least one free cable part is connected to the end point to be connected via the drop point associated with this end point.

## Patentansprüche

1. Verfahren zum Installieren eines Endabschnitts eines Kabelnetzwerks, das sich zwischen einem Verteilungspunkt und einem Endpunkt (E1), typischerweise einem Haus oder einer Gruppe von Häusern, erstreckt, das die folgenden Schritte umfasst:
- Vergraben eine Gruppe von Kabeln in der Nähe einer Anzahl an Endpunkten (E1, E2, E3), typischerweise entlang der Länge einer Straße;
- Vorbereiten eines ersten Zugriffspunkts (P1), der Zugriff auf die Gruppe von Kabeln (K1-K5) bietet, in der Nähe eines ersten Endpunkts, der angeschlossen werden soll;
- Vorbereiten eines nachfolgenden Zugriffspunkts (P2), der Zugriff auf die Gruppe von Kabeln bietet, in der Nähe eines nachfolgenden Endpunkts (E2); **gekennzeichnet durch**
- Zerteilen zumindest eines Kabels (K1), das an den ersten Endpunkt (E1) angeschlossen werden muss, am nachfolgenden Zugriffspunkt (P2) und Zurückholen (T) dieses zumindest einen Kabels vom ersten Zugriffspunkt (P1), so dass zumindest ein freier Kabelendteil erhalten wird mit einer Länge (L), die dem Abstand zwischen dem nachfolgenden (P2) und dem vorhergehenden Zugriffspunkt (P1) entspricht, und Verwenden dieses zumindest einen freien Kabelendteils dieses zumindest einen Kabels zum Anschließen des ersten Endpunkts.

2. Verfahren wie in Anspruch 1 beansprucht, das die Wiederholung der letzten zwei Schritte umfasst, bis alle Endpunkte (E1, E2, E3), die in der Nähe der vergrabenen Gruppe von Kabeln angeschlossen werden sollen, mit der notwendigen Kabellänge versorgt sind.

3. Verfahren wie in einem der vorhergehenden Ansprüche beansprucht, **dadurch gekennzeichnet, dass** das Zurückholen (T) aus einem der folgenden Vorgänge oder einer Kombination davon besteht: Zurückziehen, Zurückblasen, Zurückschieben.

4. Verfahren wie in einem der vorhergehenden Ansprüche beansprucht, **dadurch gekennzeichnet, dass** die Vorbereitung der Zugriffspunkte das Graben eines Lochs bis zur Gruppe von Kabeln (K1-K5) umfasst.

5. Verfahren wie in Anspruch 4 beansprucht, wobei die Gruppe von Kabeln (K1-K5) in einer Ummantelung aufgenommen ist, **dadurch gekennzeichnet, dass** die Vorbereitung weiterhin das Öffnen der Ummantelung umfasst.

6. Verfahren wie in einem der vorhergehenden Ansprüche beansprucht, wobei ein Absetzpunkt (DP) für einen oder mehrere Endpunkte vorgesehen ist, **dadurch gekennzeichnet, dass** der zumindest eine freie Kabelteil an den Endpunkt, der angeschlossen werden soll, über den Absetzpunkt, der diesem Endpunkt zugeordnet ist, angeschlossen wird.

## Revendications

1. Procédé destiné à installer une partie finale d'un réseau câblé s'étendant entre un point de distribution et un point d'extrémité (E1), en général une maison ou un groupe de maisons, comprenant les étapes suivantes consistant à :
- enterrer un groupe de câbles à proximité d'un certain nombre de points d'extrémité (E1, E2, E3), en général sur la longueur d'une rue ;
- préparer un premier point d'accès (P1) à proximité d'un premier point d'extrémité à raccorder qui fournit un accès au groupe de câbles (K1 à K5) ;
- préparer un point d'accès suivant (P2) à proximité d'un point d'extrémité suivant (E2) qui fournit un accès au groupe de câbles ;
**caractérisé par** :
- la coupure au niveau du point d'accès suivant (P2) d'au moins un câble (K1) qui doit être raccordé au premier point d'extrémité (E1), et ramener (T) cet au moins un câble du premier point d'accès (P1) de manière à obtenir une partie d'extrémité de câble libre, qui présente une longueur (L) correspondant à la distance entre le point d'accès suivant (P2) et le point d'accès précédent (P1), et utiliser cette au moins une partie d'extrémité de câble libre de cet au moins un câble dans le but de raccorder le premier point d'extrémité.

2. Procédé selon la revendication 1, comprenant la répétition des deux étapes finales jusqu'à ce que tous les points d'extrémité (E1, E2, E3) à raccorder à proximité du groupe de câbles enterré, soient dotés de la longueur de câble nécessaire.

3. Procédé selon l'une quelconque des revendications précédentes, **caractérisé en ce que** l'étape consistant à ramener un câble (T) se compose de l'une des opérations suivantes ou d'une association de celles-ci, consistant à : retirer, faire bouger, refouler.

4. Procédé selon l'une quelconque des revendications précédentes, **caractérisé en ce que** la préparation des points d'accès comprend une étape consistant à creuser un trou jusqu'au groupe de câbles (K1 à K5).

5. Procédé selon la revendication 4, dans lequel le groupe de câbles (K1 à K5) est reçu dans une gaine, **caractérisé en ce que** la préparation comprend en outre l'ouverture de la gaine.

6. Procédé selon l'une quelconque des revendications précédentes, dans lequel un point de branchement (PB) est prévu pour un ou pour plusieurs points d'extrémité, **caractérisé en ce que** l'au moins une partie de câbles libres est raccordée au point d'extrémité à raccorder par l'intermédiaire du point de branchement associé à ce point d'extrémité.
